(19) Europäisches Patentamt / European Patent Office / Office européen des brevets

(11) **EP 2 213 577 B1**

(12) **EUROPEAN PATENT SPECIFICATION**

(45) Date of publication and mention
of the grant of the patent:
**21.10.2015 Bulletin 2015/43**

(21) Application number: **10425016.2**

(22) Date of filing: **27.01.2010**

(51) Int Cl.:
*B65B 25/14* (2006.01)       *B65B 51/16* (2006.01)
*B65B 51/18* (2006.01)       *H05B 6/02* (2006.01)
*B29C 65/00* (2006.01)       *B29C 65/18* (2006.01)
*B29C 65/32* (2006.01)

(54) **Heat-sealing device and method for packaging machines, and packaging machine comprising said device**

Dispositif de thermoscellage et procédé pour conditionner des machines et machine de conditionnement comprenant ledit dispositif

Heißsiegelvorrichtung und Vorrichtung für Verpackungsmaschinen sowie Verpackungsmaschinen damit

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.01.2009 IT FI20090019**

(43) Date of publication of application:
**04.08.2010 Bulletin 2010/31**

(73) Proprietor: **Fabio Perini S.p.A.**
**55100 Lucca (IT)**

(72) Inventors:
• **Baldanza, Nicola**
**40033 Casalecchio di Reno (BO) (IT)**
• **Canini, Gabriele**
**40016 San Giorgia di Piano (BO) (IT)**

(74) Representative: **Mannucci, Michele et al**
**Ufficio Tecnico Ing.A. Mannucci S.r.l.**
**Via della Scala 4**
**50123 Firenze (IT)**

(56) References cited:
**EP-A1- 0 884 242       EP-A1- 1 342 551**
**DE-A1- 4 202 883**

EP 2 213 577 B1

## Description

Technical Field

The present invention relates to improvements to machines and devices for packaging products with a heat-sealed thermoplastic film.

In particular, but not exclusively, the present invention relates to devices for sealing packages of products made of tissue paper, such as serviettes, handkerchiefs, and rolls of paper wrapped in sheets of thermoplastic material.

State of the Art

In many industrial fields there is envisaged packaging of articles or products in orderly sets arranged within a wrapping made with a sheet of heat-sealable plastic film. Packages of this type are frequently used, for example, for the distribution and sale of products made of tissue paper, such as in particular rolls of toilet paper, rolls of kitchen wipes, paper serviettes, handkerchiefs, or the like.

US 6,718,728 discloses a machine for wrapping of a set of products, in particular rolls, within a sheet of heat-sealable thermoplastic material. The package is enveloped by wrapping four faces of a set of products that has a substantially parallelepipedal shape with a sheet of plastic film and by then folding the lateral flaps of the film against the bases of the package via a system of sectional folding elements. The aforementioned US patent is incorporated in the present description and reference may be made thereto as regards, for example, a possible embodiment of the members for formation of the wrapping of plastic film around the set of products to be packaged.

The package obtained by the packaging machine must be heat-sealed for stabilizing the lateral folded flaps of the sheet of thermoplastic material. For said purpose various heat-sealing devices are known, which normally use electrical resistors for generating heat, associated to a system of conveyor belts arranged at the sides of a path for feed of the package.

WO-A-02/085712 discloses a heat-sealing device of this type, in which arranged at the sides of the feeding path for the packages to be sealed are conveyor belts or bands positioned in a substantially vertical plane. Associated to the conveyor belts or bands are blower means that generate a flow of hot air fed against the faces of the package on which the folded flaps set on top of the sheet of thermoplastic material to be sealed are located.

These heat-sealing devices are particularly efficient, but have certain drawbacks linked to the wear of the conveyor belts. These belts, normally made of teflon or similar material, need to be frequently replaced. A further problem deriving from the use of the teflon-coated belts associated to the sources of hot air or to the electrical resistors for heating is represented by the fact that the quality of the packaged product degrades over time as the belts wear out.

In other packaging machines (see for example the Italian patent No. 1,305,810) plates heated by the Joule effect are provided, in sliding contact with the conveyor belts that draw the packs along the feed path. In turn, the electrically heated plates heat by contact the belts, which bring about sealing. These devices have considerable drawbacks in terms of wear of the belts since the latter work in conditions of high thermal and mechanical stress.

US-A-5,058,361 discloses a packaging machine with a system for heat-sealing the folded flaps of the packs, wherein the packs advance as a result of being drawn along by top and bottom belt conveyors. At the sides of the feed path perforated rollers are arranged, through which hot air is made to pass. This heats the flaps of the packs to be sealed that travel between series of rollers set alongside one another. The system prevents wear of the conveyor belts, which do not come into contact with heating plates, as in the known machines described above, but the thermal efficiency of this system is unsatisfactory and moreover a high flowrate of hot air is required, with consequent mechanical complications. The hot air must be fed with adequate flowrates and must be heated in a short time, and this calls for complex piping and heat-exchangers, which are complex and cumbersome.

EP-A-0884242 and DE-A-4202883 disclose sealing devices using eddy currents as sources of heat for heat-sealing a plastic web or film. Electrically conductive elements in the form of a belt or supported by a belt are driven along a closed path, partly in contact with the packages to be sealed. Eddy currents are generated by induction into the belts or into the heating elements supported by the belts.

EP-A-1342551 discloses a sealing device using a sealing ring. The sealing ring is moved across a magnetic core. The magnetic field generated by the core induces eddy currents in the rotating sealing ring. The latter is in contact with the package to be sealed.

These known sealing devices using magnetically induced eddy currents are cumbersome and inefficient.

Summary of the Invention

According to one aspect, the invention proposes a heat-sealing device for packaging machines that will totally or partially reduce or overcome one or more of the drawbacks of the known art. The device is defined in claim 1.

According to some embodiments of the invention, a device for sealing packages of products wrapped in sheets of thermoplastic material is provided, including a system for feeding the packages along a feed path and, along said feed path, at least one welding member for sealing said sheets of thermoplastic material, wherein said at lest one welding member includes a magnetic core, an electric winding and a magnetic circuit to generate a magnetic field. Along said path, and a mobile sealing element is also arranged, being heated by magnetically induced currents flowing in said sealing element and generated by said magnetic field, said at least one mobile heat-sealing element being arranged so as to come into contact with the sheets of thermoplastic material of the packages that advance along said path. The sealing element of said at least one sealing member includes a rotating heat-sealing roller forming part of said magnetic circuit. This renders the device simpler from a mechanical point of view and at the same time more efficient.

According to a preferred embodiment of the invention, the welding members comprise at least one heat-sealing roller which is at least partially immersed in a magnetic field and forms part of the magnetic circuit. The heat-sealing roller is arranged so as to come into contact with the sheets of thermoplastic material of the packages that advance along the feed path and is heated by magnetic induction. In some embodiments, the heat-sealing roller is preferably motor driven and can serve simultaneously as an element for drawing the packages along the feed path and at the same time as a heat-sealing element.

Heating is obtained advantageously as a result of the currents induced in the heat-sealing roller by a variation in time of the magnetic field. This variation can be obtained, for example, by supplying an a.c. voltage to a primary winding applied to a ferromagnetic core associated to the heat-sealing roller or to each heat-sealing roller of the heat-sealing device.

In some embodiments there can also be provided one or more conveyors, conveyor bands, roller tracks, or conveyor belts for co-operating with the heat-sealing rollers to ensure proper movement of the packages along the supply path, even though not excluded is the possibility of using (at least along one stretch of the path) exclusively the heat-sealing rollers to cause also advance of the packages. In the latter case at least some of the heat-sealing rollers is motor-driven.

When a conveyor band, or any other feeding member, is used in combination with the heat-sealing rollers, a system of synchronization between the various mobile members that contribute to feed of the packages is advantageously envisaged.

In less advantageous embodiments it is possible to envisage a system for feeding the packages that is independent of the heat-sealing rollers. In this case, it would be possible, for example, to envisage idly mounted heat-sealing rollers, which are set in motion by friction, as a result of contact with the packages, which in turn receive the motion of advance from separate conveyors. For example, it is possible to envisage one or more conveyors in the form of belts, bands or rollers, set above, underneath, or both above and underneath the feed path, whilst arranged at the sides of the path are idle rollers heated by induction simply in contact with the side surfaces of the folded flaps of the plastic film that are wrapped round the package. In this way, the heat-sealing rollers do not contribute to advance of the packages, but any mutual sliding between heat-sealing rollers and the package is prevented.

On the other hand, the use of motor-driven heat-sealing rollers that function not only as heat-sealing elements, but also as means for feeding and advancing the packages, enables a device to be obtained that is particularly compact and efficient, easy to produce and convenient to control.

Preferably the device envisages two series of heat-sealing rollers arranged on opposed sides of the feed path, along which the packages are advanced, so that each package is engaged on both opposed sides or faces by respective heat-sealing rollers for simultaneously heat sealing the folded flaps of a sheet of thermoplastic wrapping material on both opposite sides of the package.

According to preferred embodiments of the invention one or more heat-sealing rollers are provided, preferably motor driven by a single source of motion or by a number of sources of motion, for example one motor for each heat-sealing roller, or else one motor for two or more heat-sealing rollers. These heat-sealing rollers are arranged with their axes of rotation orthogonal to the direction of advance of the packages so that the rotation of the heat-sealing rollers contributes to or causes the advancement of the packages along the feed path in co-operation with overlying and/or underlying or lateral conveyors. In some embodiments, the heat-sealing rollers may also constitute the only means for feeding the packages along the path.

The heat-sealing rollers can be advantageously hollow so that a part of the magnetic circuit can pass inside them, i.e., for example a column of a ferromagnetic core, around which, in an appropriate position, a primary winding supplied by an a.c. electrical source is wound. The column of the magnetic circuit is preferably co-axial to the heat-sealing roller.

According to other embodiments the ferromagnetic core can be integrally housed within the rotating heat-sealing roller, and the electrical winding can be also located inside the rotating heat-sealing roller.

According to some embodiments, associated to the heat-sealing rollers are means for temperature control. In some embodiments to one or more of the heat-sealing rollers a temperature sensor can be associated, that generates a signal used by a controller for maintaining the temperature of the heat-sealing rollers around a pre-set value. The adjustment can be obtained by acting on the conditions of supply of the primary winding associated to a ferromagnetic core that generates the time-variable magnetic field in which the heat-sealing roller is at least partially immersed. One or more supply parameters can be used as variable quantities, for control, for example voltage, current intensity, frequency. In some embodiments a PWM signal for adjustment of the electrical power can be used.

Preferred temperature-control means and arrangements can be used, which do not make use of temperature sensors. For example, a suitable algorithm can be provided, to calculate the temperature of the heat-sealing roller based on other parameters, for example the current flowing through the electric winding. Indeed, the electric winding wound around the magnetic core can be considered as the primary winding of an electric transformer, of which the heat-sealing roller is the secondary winding. The temperature of the heat-sealing roller is linked to the ohmic resistance thereof. The latter parameter can be determined as a perturbation of the primary winding of the transformer, i.e. of the electric winding wound around the magnetic core. In other words, a variation of the temperature and thus of the resistance of the secondary winding, formed by the heat-sealing roller, causes a perturbation in the winding, e.g. a variation of the current flowing through the primary winding, said perturbation being detected by a control circuit, which can use this detected signal as a feedback control signal to modify the powering conditions such as to maintain the temperature of the heat-sealing roller within a tolerable range around a pre-determined value.

According to a further aspect, the invention concerns a packaging machine comprising a sealing device as defined above.

According to yet another aspect, the invention concerns a method for heat-sealing a product package wrapped in a sheet of thermoplastic material, wherein said package is contacted with a heat-sealing element heated by current induced therein by a magnetic field, wherein said magnetic field flows inside said heat-sealing element. The heat-sealing element is electrically conductive and ferromagnetic. The method of the invention is defined in claim 19.

According to still a further aspect, the invention concerns a device for sealing product packages wrapped in sheets of thermoplastic material, comprising a system for feeding the packages along a feed path and, along said feed path, a first set of welding members and a second set of welding members arranged on a first side and on a second side of said feed path, respectively, each welding member including a heated rotating roller contacting said sheets of thermoplastic material wrapped around said packages. Moreover, at least one of said rotating rollers is motor driven and exerts a thrust on said packages so as to feed said packages along said feed path. Preferably all of said rollers are motor-driven.

The heated rotating roller can be heated by magnetically induced eddy currents, or in another manner, e.g. by means of an electric resistor suitably arranged in such a manner that it can heat the surface of the roller. In some embodiments the electric resistor is arranged inside the roller. In other embodiments, the roller can be heated with a flow of heated fluid, e.g. heated air flowing through the roller, in the roller or around the roller.

The packages are thus advanced by the motor-driven rollers, alone or in combination with other conveyor means, such as upper, lower or side belts. The rollers at the same time cause sealing of the wrapping sheet or film. Each package is contacted on both sides in sequence by a plurality of heat-sealing rollers.

A particularly efficient sealing and advancing system is thus obtained.

According to yet another aspect, the invention concerns a method for heat-sealing a product package wrapped in a sheet of thermoplastic material, including: arranging a first set of heat-sealing rollers and a second set of heat-sealing rollers respectively on a first side and on a second side of an advancement or feed path for said package; contacting said sheet of thermoplastic material wrapped around said package with said heat-sealing rollers; wherein at least one of said rotating rollers is motor driven and exerts a thrust on said packages so as to feed said packages along said advancement path.

Brief Description of the Drawings

The invention will be better understood following the description and the annexed drawings, which shows non-limiting practical embodiments of the invention. In the drawings:

Figure 1 shows a plan view of a heat-sealing device according to the invention in a first embodiment;
Figure 1A shows a partial perspective view of the device of Figure 1;
Figure 2 shows a first embodiment of a single welding member;
Figure 2A shows a schematic representation of the lines of force of the magnetic circuit in the welding member according to the embodiment of Figure 2;
Figures 3A, 3B show electric diagrams explaining the principle of temperature measurement without the use of a temperature sensor;
Figure 4 shows a second embodiment of a single welding member;
Figures 4A is a schematic representation of the lines of force of the magnetic circuit in the welding member according to the embodiment of Figure 4; and
Figure 5 shows a further embodiment of a welding member..

Detailed Description of Embodiments of the Invention

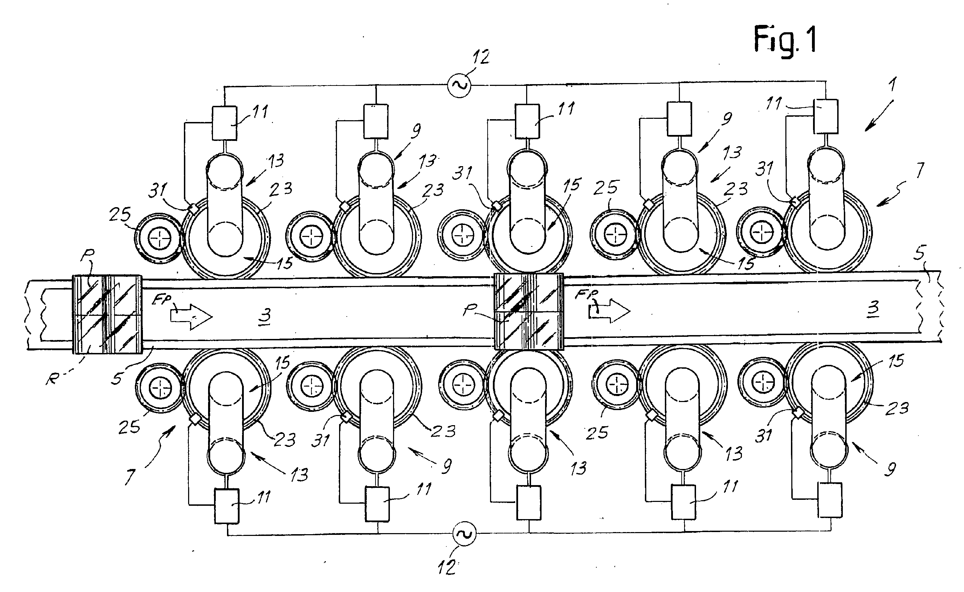

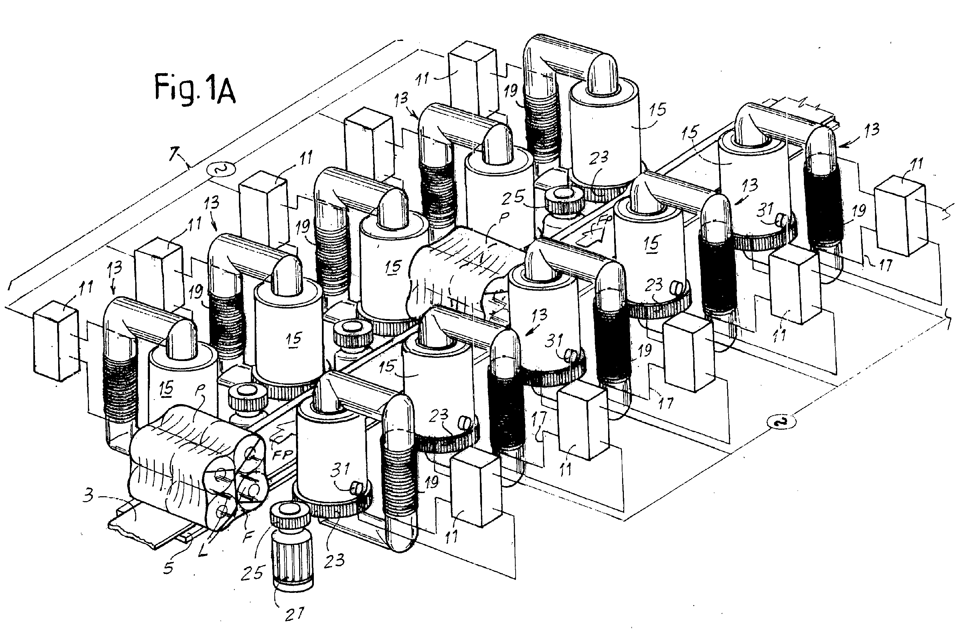

With initial reference to the embodiment of Figure 1, the heat-sealing device is designated as a whole by 1. It includes a path along which single packages or packs P advance, for example rolls R of tissue paper (see Figure 1A), such as toilet paper or the like. Designated by Fp is the direction of feed of the packages or packs P along the feed path. F is the plastic sheet or film wrapping each package P.

In some embodiments, along the feed path there can be provided a bottom conveyor belt 3 as an aid to drawing the packages or packs P along. The conveyor 3 runs on top of a load-bearing structure 5 in the direction of advance Fp. In other embodiments the conveyor 3 can be replaced by a series of bottom belts, or else by one or more top and/or bottom conveyor belts, or else it can even be omitted altogether at least in the central area of the heat-sealing device, where the advance can be guaranteed by motor-driven mobile elements described hereinafter, that constitute also heat-sealing elements proper. In such case a stationary plate can be arranged underneath the feed path to support the packages while they are advanced along the path.

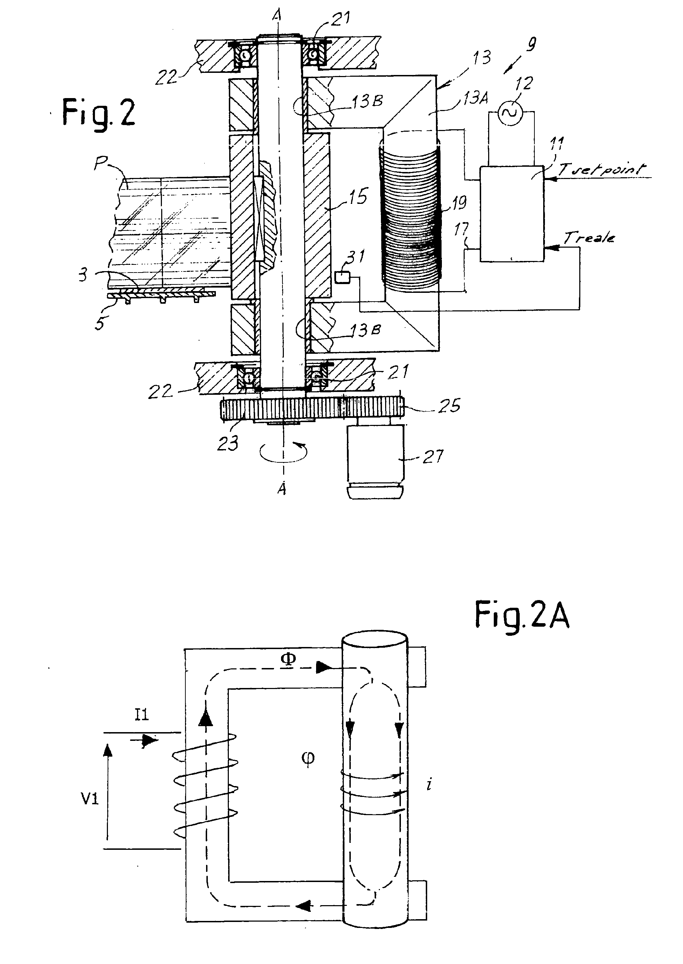

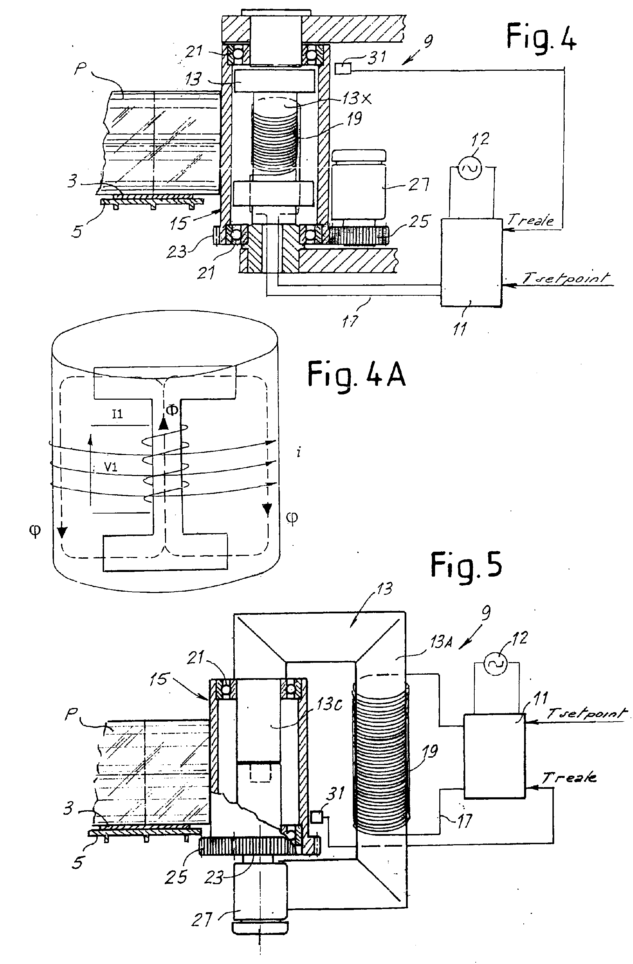

In the embodiment shown in Figures 1 and 1A, on either side of the feed path two assemblies of welding members designated schematically and as a whole by 7 are arranged. Each welding member is designated by 9 and can take different configurations, some of which will be described in greater detail hereinafter with reference to the embodiments represented in Figures 2 and 4.

Designated by 11 is a control circuit for each welding member 9 and designated by 12 a source of a.c. electrical energy, for example a voltage source or a current source.

The arrangement of the welding members 9 of the two assemblies 7 can be substantially symmetrical with respect to a substantially vertical plane parallel to the direction Fp of feed of the packs or packages P. On the other hand, the possibility is not excluded of arranging the assemblies only on one side, for example in the case where the packages require heat sealing only on one face. In other embodiments it is possible to arrange the assemblies of welding members with different configurations, i.e., non-symmetrical on the two sides of the path for feed of the packs or packages P.

In some embodiments each welding member 9 has a ferromagnetic core 13 associated to electrical supply members for the generation of an a.c. magnetic field or in any case a time-variable magnetic field. Associated to the ferromagnetic core 13 is a mobile heat-sealing element 15, usually shaped as a rotating roller that can assume various configurations as described in greater detail in what follows. Typically and preferably, each heat-sealing element 15 is in the form of a roller with a substantially vertical axis of rotation, i.e., orthogonal to the plane of feed of the packages or packs P to be heat sealed.

In some preferred embodiments the heat-sealing rollers 15 are made of electrically conductive and ferromagnetic material, such that they form part of the magnetic circuit and allow eddy currents to flow in the material of which the rollers are made. In preferred embodiments the rotation of the heat-sealing rollers is controlled by a motor member. In such embodiments said heat-sealing rollers 15 assist or cause, possibly in combination with the conveyor belt 3, the advancement of the packs or packages P in the direction Fp along the feed path. In addition to this function, the heat-sealing rollers 15 also have the function of heating up to the heat-sealing temperature in the area of contact the film or sheet of plastic material F that is wrapped round the products R of each single package or pack P so as to seal the opposed flaps L (Figure 1A) on each of the two base faces of the package or pack P, which face the assemblies 7 of welding members 9.

In some embodiments, each welding member 9 can be configured as represented schematically in Figure 2. In this figure designated once again by 11 is the control circuit connected to the supply source 12. The circuit 11 supplies, via the energy supplied by the source 12, an electrical conductor 17, which forms a winding 19 on a column 13A of the ferromagnetic core 13, which constitutes at least part of a magnetic circuit contained in which are the field lines of the time-variable magnetic field. The magnetic field can have a sinusoidal waveform, obtained with a sinusoidal a.c. current supplied by the source 12. Not ruled out are other waveforms such as, for example, trapezoidal, triangular, rectangular, or the like.

The ferromagnetic core 13 is substantially in the shape of a "C" and has through seats 13B for the mobile element comprised of a heat-sealing roller 15 rotating about the axis A-A. The heat-sealing roller 15 is supported by bearings 21 constrained to a load-bearing structure 22 of a suitable shape and here represented schematically. The heat-sealing roller 15 can be a hollow roller with an appropriate structure for generating induced currents concentrated in the surface area of the roller, where generation of heat for sealing is required. The heat is generated by the Joule effect by the currents induced by the magnetic field. As noted above, preferably the heat-sealing roller is made of ferromagnetic material. Therefore the ferromagnetic circuit is formed, in this embodiment, by the C-shaped core 13 and by the heat-sealing roller 15 itself, which forms a closed structure along with the core 13.

The magnetic flux generated by the winding 19 flows through the cylindrical body of the heat-sealing roller 15, which being ferromagnetic and electrically conductive, allows at the same time the flow of the magnetic flux and the circulation of eddy currents generated by the magnetic field. Figure 2A diagrammatically shows the behaviour of the lines of force of the magnetic field in the magnetic circuit formed by the C-shaped core 13 and the heat-sealing roller 15.

In some embodiments, in order to draw the heat-sealing roller 15 into rotation a gear wheel 23 is provided fitted in an appropriate position on the roller, for example at its bottom end. The gear wheel 23 can be driven in rotation via a pinion 25 actuated by an electric motor 27. In some embodiments there can be provided a motor 27 for each heat-sealing roller 15 of the device 1. In other embodiments a single motor can actuate, via an appropriate transmission, two or more heat-sealing rollers 15.

In some embodiments, associated to the heat-sealing roller 15 of each welding member 9 or at least to some of them is a temperature sensor schematically designated by 31 in Figure 2. The sensor 31 supplies a temperature signal to the control circuit or controller 11. The actual value $T_{reale}$ of the temperature measured constitutes a feedback signal, which is compared with a pre-set value of temperature $T_{setpoint}$. From the comparison between these two values, which can be obtained with a circuit known per se, an error signal is generated. The controller 11 uses said error signal for adjusting the supply to the winding 19 so as to maintain the actual temperature of the heat-sealing roller 15 within an acceptable interval of tolerance around the pre-set temperature value $T_{setpoint}$. In this way, the system effectively controls the temperature so that it is close to the optimal value to obtain sealing, possibly also as a function of the operating rate of the machine (the greater the rate of feed the packages or packs P through the device 1, the higher the heat-sealing temperature, taking into account the shorter time of stay of each package in contact with the rollers 15).

In other embodiments the temperature control can be made without using a temperature sensor, but based on a suitable algorithm, which uses electric parameters of the current powering the winding 19. Each welding member 9 is indeed a sort of transformer, where the roller 15 acts as a secondary winding. The temperature thereof can be determined based on the ohmic resistance of the heat-sealing roller 15. Said resistance can be determined as a perturbing factor of the primary resistance of the transformer.

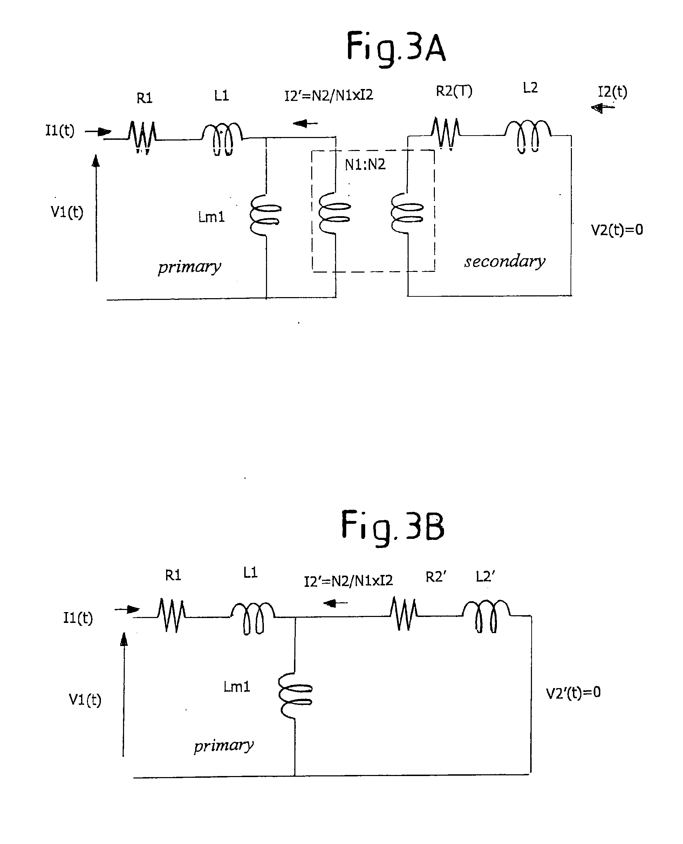

A possible approach for temperature measurement without the use of a temperature sensor will be explained here below referring to Figures 3A and 3B.

The welding member 9 can be represented as a transformer. Winding 19 is the primary winding, core 13 and heat-sealing roller 15 form the core of the transformer and the heat-sealing roller 15 also forms the secondary of the transformer. The secondary winding is short-circuited.

Every electrically conductive metallic material is characterized by a link between the ohmic resistance of the material and the temperature of the material. The relationship between temperature and resistance depends upon coefficients which are a function of the chemical and physical characteristics of the metal material but do not depend upon its shape. Therefore, once the relationship between temperature and resistance has been experimentally established, it will be possible to estimate the temperature of the roller by determining the ohmic resistance thereof.

However, since it would be rather impractical to measure the ohmic resistance of the roller by direct measurement, e.g. using electrodes to contact the roller while the latter is rotating, an indirect calculation of the ohmic resistance of the roller is performed, based on well known equations linking the electric parameters of the primary and secondary winding in a transformer. In the welding member 9, as stated above, the secondary winding is formed by the roller.

Figure 3A schematically shows the electronic circuit equivalent to the transformer. The following parameters are shown in Fig.3A:

| | |
|---|---|
| I1(t): | current flowing in the primary winding (winding 19); |
| V1(t): | voltage across the primary winding; |
| R1, L1: | resistance and inductance of the primary winding; |
| Lm1: | magnetization inductance; |
| N1, N2: | number of turns of the primary and secondary windings; |
| R2(T): | resistance of the secondary winding, i.e. of the roller 15; |
| L2: | inductance of the secondary winding; |
| I2(t): | current flowing in the secondary winding; |
| V2(t): | voltage across the secondary winding. This voltage is zero, because the secondary winding is short-circuited. |

Figure 3B shows the same equivalent circuit seen from the primary winding. The same parameters are indicated with the same references used in Fig.3A. In addition, I2', R2' and L2' correspond to R2 and L2 and are expressed as follows:

$$I2' = (N2/N1)I2$$

$$R2' = R2*(N1/N2)^2$$

$$L2' = L2*(N1/N2)^2$$

The following parameters of the circuit of Figure 3B are known: R1, L1, Lm1, L2'. The value of R2' can be determined from the usual equations describing the electric network shown in Figure 3B. Based on the measurement of I1(t) and V1(t), therefore, the value of the R2 and consequently the value of T2 can be determined. As noted above, the relationship between R2 and T2 is represented by a curve which can be determined experimentally. The relationship can be defined by means of a mathematical function of coordinates of the curve can be stored in parametric form or else can be stored in a look-up table. An electronic control unit provided in control circuit 11 in Figure 2 can be programmed to perform an algorithm which calculates the temperature of the roller 15 (or to be more precise provides an estimation thereof) based on the stored data providing the relationship between resistance R2 and temperature T, and based on the measurements of the electric parameters of the power circuit, V(t) and I(t).

The control unit of control circuit 11 can drive the heating circuit by controlling e.g. the voltage or the current across the winding 19, such as to maintain the temperature of the heat-sealing roller 15 in a range around a pre-set value.

Figure 4 shows a further modified embodiment of a welding member 9 The same numbers designate parts that are the same as or equivalent to those of Figures 2 and 3. In this embodiment the heat-sealing roller 15 forming the heat-sealing element is supported by bearings 21 on the load-bearing structure 22. The roller 15 is torsionally fixed with respect to a gear 23 to which the motion is supplied via a motor 27 and a pinion 25.

In this embodiment the ferromagnetic core forming the magnetic circuit is designated once again by 13 and is housed integrally within the heat-sealing roller 15. In some embodiments, as shown in the drawing, the ferromagnetic core 13 has an H-shaped longitudinal section with a central column 13X wound on which are the turns that form the winding 19 supplied via the conductor 17 and the control circuit 11 with the electrical energy supplied by the a.c. source 12. Figure 4A shows a diagram indicating the behaviour of the magnetic flux in the magnetic circuit formed by the inner core 13X and by the outer cylinder 15.

In the above described embodiments, the magnetic flux generated by the winding 19 partly flows through the ferromagnetic material forming the heat-sealing roller 15. Specifically referring to the embodiment in Fig.4A, the magnetic flux is divided into two half-fluxes that affect the volume of the cylindrical skirt of the heat-sealing roller 15 so that, also in this case, the variation in time of the magnetic field generated by the winding 19 causes induction of eddy currents in the heat-sealing roller 15 and hence generation of heat for performing sealing.

Also in this embodiment the temperature of the heat-sealing roller 15 can be determined by means of a temperature sensor 31, or preferably by means an algorithm based on the relationship between temperature and resistance of the heat-sealing roller 15 forming the secondary winding of the transformer, of which winding 19 is the primary winding and core 13 + heat-sealing roller 15 form the ferromagnetic core.

In all the cases illustrated above each welding member 9 comprises a respective core 13 made of ferromagnetic material with at least one winding 19 supplied by electrical energy coming from an a.c. or d.c. source through a control system. The control system supplies the winding 19 with the adequate waveform, preferably a.c., to obtain a time-variable magnetic flux. The time-variable magnetic flux traverses the material of which the heat-sealing roller 15 is made, which forms the mobile heat-sealing element so that induced eddy currents are generated inside it, which cause heating of the heat-sealing roller, and this, as a result of the contact with the sheet material F, causes sealing of the flaps L. In these embodiments, hence, any flexible members such as belts or the like in the sealing area are completely eliminated, and the heat-sealing rollers that form the mobile elements 15 preferably constitute both means of propulsion of the packages or packs P and heat-sealing means. In other embodiments the heat-sealing rollers 15 can be idly supported, and therefore they will only act as heat-sealing means. In both cases, each roller being made of ferromagnetic and electrically conductive material act both as part of the magnetic circuit, across which the magnetic field flows, as well as heating resistor, heat being generated by Joule effect caused by the eddy currents flowing through the material forming the rollers.

Figure 5 shows a different embodiment of the heat-sealing roller 15 and of the magnetic circuit for each welding member 9. The same numbers designate parts that are the same as or equivalent to those of the embodiment illustrated in Figure 2. In the embodiment of Figure 6 the ferromagnetic core 13 extends within the heat-sealing roller 15, said roller being supported via bearings 21 directly on the ferromagnetic core 13 and more in particular on a column 13C which extends approximately coaxial to the heat-sealing roller 15. In this embodiment, the magnetic core is formed by the outer C-shaped element 13 and the column 13C extending through the roller 15 and preferably substantially co-axial therewith. In this embodiment, the heat-sealing roller 15 does not require to be made of ferro-magnetic material.

In general, in all the embodiments the material constituting the ferromagnetic core or cores 13 has a high magnetic permeability, but a preferably low electrical conductivity so as to maximize the magnetic flux and minimize the eddy currents within the core itself. In a way known per se, the magnetic core 13 forming the magnetic circuit of each welding member 9 can be made with a core formed by laminar elements for reducing the eddy currents and hence the dispersions in the ferromagnetic core, with a criterion similar to the one adopted in the production of transformers and winding cores of electric motors. In other embodiments, the ferromagnetic core can be made of pastes of ferromagnetic materials with high permeability but with extremely high electrical resistance, such as ferrites, etc. Instead, the roller 15 is made of a material with low electrical resistance so as to enable generation of very high induced currents and hence to be heated by the Joule effect in a satisfactory way (the heat generated is proportional to the square of the circulating current). Preferably, the temperature at which the heat-sealing rollers 15 are heated is around 250°C. However, it is to be understood that this value is purely indicative and non-limiting and may vary, for example, according to the operating conditions of the machine, such as for example the package sealing rate, and/or the type of material used for packaging the packs or packages P.

It is understood that the drawings merely shows one example provided purely as a practical demonstration of the invention, which can vary in the forms and arrangements, without thereby departing from the scope of the idea underlying the invention. The possible presence of reference numbers in the annexed claims has the purpose of facilitating reading of the claims with reference to the description and to the plate of drawings, and in no way limits the sphere of protection represented by the claims.

## Claims

1. A device for sealing product packages (P) wrapped in sheets of thermoplastic material (F), comprising a system for feeding the packages along a feed path and, along said feed path, welding members (9) for sealing said sheets of thermoplastic material; wherein each welding member (9) comprises a magnetic field generator (11, 13, 13X, 19) with a magnetic circuit and a mobile heat-sealing element (15) heated by currents in said mobile heat-sealing element (15) magnetically induced by said magnetic field generator (11, 13, 13X, 19); **characterized by** a first set of welding members (9) and a second set of welding members arranged on a first side and on a second side of said feed path, respectively; wherein each mobile heat-sealing element (15) includes a rotating roller; and wherein said first set of welding members (9) and said second set of welding members (9) and said feed path are arranged such that the device is able to seal opposed sides or faces of packages (P) wrapped in said sheets of thermoplastic material (F) which advance along said feed path between said opposed mobile heat-sealing elements (15) and in contact therewith.

2. The device according to claim 1, **characterized in that** each mobile heat-sealing element (15) forms part of the respective magnetic circuit.

3. The device according to claim 1 or 2, **characterized by** an electric winding (19) arranged around a ferromagnetic core (13; 13X), said magnetic circuit including said ferromagnetic core (13, 13X) and said mobile heat-sealing element (15).

4. The device according to claim 1 or 2 or 3, **characterized in that** said magnetic field varies in time.

5. The device according to one or more of the preceding claims, **characterized in that** said mobile heat-sealing element (15) is motor driven and exerts a thrust on said packages (P) so as to feed said packages along said feed path (F).

6. The device according to one or more of the preceding claims, **characterized in that** said each mobile heat-sealing element (15) is controlled in such a way that the peripheral speed thereof in the point of contact with the sheets of thermoplastic material (F) of the packages (P) that advance along said path is substantially equal to the speed of feed of said packages (P).

7. The device according to one or more of the preceding claims, **characterized in that** the oppositely arranged mobile heat-sealing elements (15) are motor-driven and the movement of said heat-sealing elements (15) causes the advance of said packages.

8. The device according to one or more of the preceding claims, **characterized in that** said electric winding (19) is connected to a source (12) of a.c. electrical energy.

9. The device according to one or more of the preceding claims, **characterized in that** said magnetic core (13, 13X) is set at least partially within the respective mobile heat-sealing element (15).

10. The device according to claim 9, **characterized in that** said magnetic core (13) extends at least partially coaxial to said mobile heat-sealing element (15).

11. The device according to claim 10, **characterized in that** said electric winding (19) is wound around said magnetic core (13X) inside said mobile heat-sealing element (15).

12. The device according to claim 9, 10 or 11, **characterized in that** magnetic core (13; 13X) and a cylindrical wall of said mobile heat-sealing element (15) form said magnetic circuit.

13. The device according to one or more of the preceding claims, **characterized by** a temperature controlling circuit (11) for controlling the temperature of the mobile heat-sealing element (15).

14. The device according to claim 13 **characterized by** a temperature sensor (31) for detecting the temperature of said mobile heat-sealing element (15), and a controller that generates a feedback signal for controlling at least one parameter for supply of an electric winding (19), said parameter being controlled for maintaining the temperature of said mobile heat-sealing element (15) around a pre-set value.

15. The device according to claim 14, **characterized in that** said feedback signal is used for controlling a parameter of a source of electrical energy (12), chosen from the group comprising: voltage, frequency, and current; said source of electrical energy being connected to said electric winding.

16. The device according to claim 13, **characterized in that** said temperature controlling circuit (11) is designed and controlled to determine the temperature of said mobile heat-sealing element (15) based on at least one operating parameter of said electric winding (19).

17. Device according to any one of the preceding claims, wherein each heat-sealing element (15) is supported by means of bearings (21) on a portion (13C) of a ferromagnetic core (13) of said magnetic field generator (11, 13, 13X, 19), the magnetic field generated by said magnetic field generator inducing eddy currents in said mobile heat-sealing element (15), to heat said roller.

18. A packaging machine comprising a device according to one or more of the preceding claims.

19. A method for heat-sealing a product package (P) wrapped in a sheet of thermoplastic material (F), comprising the steps of: arranging a first set comprising a plurality of heat-sealing rollers (15) and a second set comprising a plurality of heat-sealing rollers (15) respectively on a first side and on a second side of an advancement path for said package (P); contacting said sheet of thermoplastic material (F) wrapped around said package with said heat-sealing rollers (15) on opposed sides or faces of the package; heating said heat-sealing rollers (15) by current induced therein by a respective magnetic field, flowing inside each said heat-sealing rollers.

**Patentansprüche**

1. Vorrichtung zum Versiegeln von Produktpackungen (P), die mit Lagen aus thermoplastischem Material (F) umwickelt sind, umfassend ein System zum Zuführen der Packungen entlang eines Zuführweges und, entlang des Zuführweges, Schweißelemente (9) zum Versiegeln der Lagen aus thermoplastischem Material, wobei jedes Schweißelement (9) einen Magnetfeldgenerator (11, 13, 13X, 19) mit einem Magnetkreis umfasst, sowie ein bewegliches Heißsiegelelement (15), das durch Ströme in dem beweglichen Heißsiegelelement (15) erhitzt wird, die durch den Magnetfeldgenerator (11, 13, 13X, 19) magnetisch induziert werden, **gekennzeichnet durch** einen ersten Satz von Schweißelementen (9) und einen zweiten Satz von Schweißelementen, die an einer ersten Seite beziehungsweise an einer zweiten Seite des Zuführweges angeordnet sind, wobei jedes bewegliche Heißsiegelelement (15) eine rotierende Walze aufweist, und wobei der erste Satz von Schweißelementen (9) und der zweite Satz von Schweißelementen (9) und der Zuführweg derart angeordnet sind, dass gegenüberliegende Seiten oder Flächen von Packungen (P), die mit den Lagen aus thermoplastischem Material (F) umwickelt sind und die entlang des Zuführweges zwischen den gegenüberliegenden beweglichen Heißsiegelelementen (15) und in Kontakt mit diesen vorgeschoben werden, **durch** die Vorrichtung versiegelt werden können.

2. Vorrichtung nach Anspruch 1, **dadurch gekennzeichnet, dass** jedes bewegliche Heißsiegelelement (15) Teil des jeweiligen Magnetkreises ist.

3. Vorrichtung nach Anspruch 1 oder 2, **gekennzeichnet durch** eine elektrische Wicklung (19), die um einen ferromagnetischen Kern (13; 13X) herum angeordnet ist, wobei der Magnetkreis den ferromagnetischen Kern (13, 13X) und das bewegliche Heißsiegelelement (15) umfasst.

4. Vorrichtung nach Anspruch 1 oder 2 oder 3, **dadurch gekennzeichnet, dass** das Magnetfeld im Zeitverlauf variiert.

5. Vorrichtung nach einem oder mehreren der vorhergehenden Ansprüche, **dadurch gekennzeichnet, dass** das bewegliche Heißsiegelelement (15) motorgetrieben ist und einen Druck auf die Packungen (P) ausübt, um die Packungen entlang des Zuführweges (F) zuzuführen.

6. Vorrichtung nach einem oder mehreren der vorhergehenden Ansprüche, **dadurch gekennzeichnet, dass** jedes bewegliche Heißsiegelelement (15) in solcher Weise gesteuert wird, dass dessen Umfangsgeschwindigkeit an der Kontaktstelle mit den Lagen aus thermoplastischem Material (F) der entlang des Weges vorgeschobenen Packungen (P) im Wesentlichen gleich der Zuführgeschwindigkeit der Packungen (P) ist.

7. Vorrichtung nach einem oder mehreren der vorhergehenden Ansprüche, **dadurch gekennzeichnet, dass** die gegenüberliegend angeordneten beweglichen Heißsiegelelemente (15) motorgetrieben sind und die Bewegung der Heißsiegelelemente (15) den Vorschub der Packungen bewirkt.

8. Vorrichtung nach einem oder mehreren der vorhergehenden Ansprüche, **dadurch gekennzeichnet, dass** die elektrische Wicklung (19) an eine elektrischen Wechselstromquelle (12) angeschlossen ist.

9. Vorrichtung nach einem oder mehreren der vorhergehenden Ansprüche, **dadurch gekennzeichnet, dass** der Magnetkern (13, 13X) zumindest teilweise innerhalb des jeweiligen beweglichen Heißsiegelelements (15) angeordnet ist.

10. Vorrichtung nach Anspruch 9, **dadurch gekennzeichnet, dass** sich der Magnetkern (13) zumindest teilweise koaxial zu dem beweglichen Heißsiegelelement (15) erstreckt.

11. Vorrichtung nach Anspruch 10, **dadurch gekennzeichnet, dass** die elektrische Wicklung (19) innenseitig des beweglichen Heißsiegelelements (15) um den Magnetkern (13X) gewickelt ist.

12. Vorrichtung nach Anspruch 9, 10 oder 11, **dadurch gekennzeichnet, dass** der Magnetkern (13; 13X) und eine zylindrische Wandung des beweglichen Heißsiegelelements (15) den Magnetkreis bilden.

13. Vorrichtung nach einem oder mehreren der vorhergehenden Ansprüche, **gekennzeichnet durch** eine Temperatursteuerschaltung (11) zur Steuerung der Temperatur des beweglichen Heißsiegelelements (15).

14. Vorrichtung nach Anspruch 13, **gekennzeichnet durch** einen Temperatursensor (31) zum Erfassen der Temperatur des beweglichen Heißsiegelelements (15), und eine Steuereinheit, die ein Rückkopplungssignal zur Regelung zumindest eines Parameters zur Speisung einer elektrischen Wicklung (19) erzeugt, wobei der Parameter geregelt wird, um die Temperatur des beweglichen Heißsiegelelements (15) um einen voreingestellten Wert herum zu halten.

15. Vorrichtung nach Anspruch 14, **dadurch gekennzeichnet, dass** das Rückkopplungssignal zur Regelung eines Parameters einer elektrischen Energiequelle (12) verwendet wird, ausgewählt aus der Gruppe umfassend: Spannung, Frequenz, und Stromstärke, wobei die elektrische Energiequelle an die elektrische Wicklung angeschlossen ist.

16. Vorrichtung nach Anspruch 13, **dadurch gekennzeichnet, dass** die Temperatursteuerschaltung (11) derart ausgelegt ist und gesteuert wird, dass die Temperatur des beweglichen Heißsiegelelements (15) basierend auf wenigstens einem Betriebsparameter der elektrischen Wicklung (19) bestimmt wird.

17. Vorrichtung nach einem der vorhergehenden Ansprüche, wobei jedes Heißsiegelelement (15) mittels Lagern (21) auf einem Abschnitt (13C) eines ferromagnetischen Kerns (13) des Magnetfeldgenerators (11, 13, 13X, 19) gehalten wird, wobei das durch den Magnetfeldgenerator erzeugte Magnetfeld Wirbelströme in dem beweglichen Heißsiegelelement (15) induziert, um die Walze zu erhitzen.

18. Verpackungsmaschine, welche eine Vorrichtung nach einem oder mehreren der vorhergehenden Ansprüche umfasst.

19. Verfahren zum Heißversiegeln von Produktpackungen (P), die mit Lagen aus thermoplastischem Material (F) umwickelt sind, mit folgenden Schritten:

Anordnen eines ersten Satzes aus einer Mehrzahl von Heißsiegelwalzen (15) und eines zweiten Satz aus einer Mehrzahl von Heißsiegelwalzen (15) an einer ersten Seite beziehungsweise an einer zweiten Seite eines Vorschubweges für die Packungen (P);
In-Kontakt-Bringen der Lage aus thermoplastischem Material (F), mit der die Packung umwickelt ist, mit den Heißsiegelwalzen (15) an gegenüberliegenden Seiten oder Flächen der Packung;
Erhitzen der Heißsiegelwalzen (15) durch Strom, der in diesen durch ein jeweiliges Magnetfeld induziert wird und der im Inneren der jeweiligen Heißsiegelwalze fließt.

**Revendications**

1. Un dispositif pour sceller des paquets de produit (P) enveloppés dans des feuilles de matériau thermoplastique (F), comprenant un système pour faire avancer les paquets le long d'un chemin d'amenée, et, le long dudit chemin d'amenée, des organes de soudage (9) pour sceller lesdites feuilles de matériau thermoplastique ; dans lequel chaque organe de soudage (9) comprend un générateur de champ magnétique (11, 13, 13X, 19) avec un circuit magnétique et un élément mobile de scellement à chaud (15) chauffé par des courants au sein dudit élément mobile de scellement à chaud (15) induits magnétiquement par ledit générateur de champ magnétique (11, 13, 13X, 19) ; **caractérisé par** un premier ensemble d'organe de soudage (9) et un second ensemble d'organes de soudage agencés respectivement sur un premier côté et sur un second côté dudit chemin d'amenée ; dans lequel chaque élément mobile de scellement à chaud (15) inclut un rouleau rotatif; et dans lequel ledit premier ensemble d'organes de soudage (9) et ledit second ensemble d'organes de soudage (9) et ledit chemin d'amenée sont agencés de telle sorte que le dispositif est capable de sceller des côtés ou faces opposé(e)s de paquets (P) enveloppés dans lesdites feuilles de matériau thermoplastique (F), lesquels avancent le long dudit chemin d'amenée entre lesdits éléments mobiles de scellement à chaud opposés (15) et en contact avec eux.

2. Le dispositif selon la revendication 1, **caractérisé en ce que** chaque élément mobile de scellement à chaud (15) fait partie d'un circuit magnétique respectif.

3. Dispositif selon la revendication 1 ou 2, **caractérisé par** un enroulement électrique (19) agencé autour d'un noyau ferromagnétique (13, 13X), ledit circuit magnétique incluant ledit noyau ferromagnétique (13, 13X) et ledit élément mobile de scellement à chaud (15).

4. Le dispositif selon la revendication 1, 2 ou 3, **caractérisé en ce que** ledit champ magnétique varie dans le temps.

5. Le dispositif selon une ou plusieurs des revendications précédentes, **caractérisé en ce que** ledit élément mobile de scellement à chaud (15) est entraîné par un moteur et exerce une poussée sur lesdits paquets (P) de façon à faire avancer lesdits paquets le long dudit chemin d'amenée (F).

6. Le dispositif selon une ou plusieurs des revendications précédentes, **caractérisé en ce que** chacun desdits éléments mobiles de scellement à chaud (15) est commandé d'une telle manière que sa vitesse périphérique au point de contact avec les feuilles de matériau thermoplastique (F) des paquets (P) qui avancent le long dudit chemin soit sensiblement égale à la vitesse d'avancement desdits paquets (P).

7. Le dispositif selon une ou plusieurs des revendications précédentes, **caractérisé en ce que** les éléments mobiles de scellement à chaud (15) agencés face à face sont entraînés par un moteur et le mouvement desdits éléments de scellement à chaud (15) provoque l'avancement desdits paquets.

8. Le dispositif selon une ou plusieurs des revendications précédentes, **caractérisé en ce que** ledit enroulement électrique (19) est connecté à une source (12) d'énergie électrique de courant alternatif.

9. Le dispositif selon une ou plusieurs des revendications précédentes, **caractérisé en ce que** ledit noyau magnétique (13, 13X) est placé au moins partiellement à l'intérieur de l'élément mobile de scellement à chaud (15) respectif.

10. Le dispositif selon la revendication 9, **caractérisé en ce que** ledit noyau magnétique (13) s'étend de façon au moins coaxiale audit élément mobile de scellement à chaud (15).

11. Le dispositif selon la revendication 10, **caractérisé en ce que** ledit enroulement électrique (19) est enroulé autour dudit noyau magnétique (13X) à l'intérieur dudit élément mobile de scellement à chaud (15).

12. Le dispositif selon la revendication 9, 10 ou 11, **caractérisé en ce que** ledit noyau magnétique (13 ; 13X) et une paroi cylindrique dudit élément mobile de scellement à chaud (15) forment ledit circuit magnétique.

13. Le dispositif selon une ou plusieurs des revendications précédentes, **caractérisé par** un circuit de commande de température (11) pour commander la température de l'élément mobile de scellement à chaud (15).

14. Le dispositif selon la revendication 13, **caractérisé par** un instrument de mesure de la température (31) pour mesurer la température dudit élément mobile de scellement à chaud (15), et une unité de commande qui génère un signal de retour d'informations pour commander au moins un paramètre pour alimenter un enroulement électrique (19), ledit paramètre étant commandé pour maintenir la température dudit élément mobile de scellement à chaud (15) autour d'une valeur prédéterminée.

15. Le dispositif selon la revendication 14, **caractérisé en ce que** ledit signal de retour d'informations est utilisé pour commander un paramètre d'une source d'énergie électrique (12) choisi dans le groupe comprenant : la tension, la fréquence et le courant ; ladite source d'énergie électrique étant connectée audit enroulement électrique.

16. Le dispositif selon la revendication 13, **caractérisé en ce que** ledit circuit de commande de température (11) est conçu et commandé pour déterminer la température dudit élément mobile de scellement à chaud (15) sur la base d'au moins un paramètre de fonctionnement dudit enroulement électrique (19).

17. Dispositif selon une ou plusieurs des revendications précédentes, dans lequel chaque élément de scellement à chaud (15) est supporté par des roulements à billes (21) sur une partie (13C) d'un noyau ferromagnétique (13) dudit générateur de champ magnétique (11, 13, 13X, 19), le champ magnétique généré par ledit générateur de champ magnétique induisant des courants Eddy dans ledit élément mobile de scellement à chaud (15) pour chauffer ledit rouleau.

18. Une machine de conditionnement comprenant un dispositif selon une ou plusieurs des revendications précédentes.

19. Un procédé pour sceller à chaud un paquet de produit (P) enveloppé dans une feuille de matériau thermoplastique (F), comprenant les étapes consistant à : agencer un premier ensemble comprenant une pluralité de rouleaux de scellement à chaud (15) et un second ensemble comprenant une pluralité de rouleaux de scellement à chaud (15) respectivement d'un premier côté et d'un second côté d'un chemin d'avancement pour ledit paquet (P) ; mettre en contact ladite feuille de matériau thermoplastique (F) enveloppée autour dudit paquet avec lesdits rouleaux de scellement à chaud (15) sur des côtés ou faces opposé(e)s du paquet ; chauffer lesdits rouleaux de scellement à chaud (15) au moyen d'un courant induit en leur sein par un champ magnétique respectif régnant à l'intérieur de chacun desdits rouleaux de scellement à chaud.

Fig.1

Fig.1A

EP 2 213 577 B1

# Fig. 2

# Fig. 2A

# Fig.3A

R1  L1  I2'=N2/N1xI2  R2(T)  L2  I2(t)

I1(t) →

V1(t)

Lm1  N1:N2

*primary*  *secondary*

V2(t)=0

# Fig.3B

R1  L1  I2'=N2/N1xI2  R2'  L2'

I1(t) →

V1(t)

Lm1

*primary*

V2'(t)=0

EP 2 213 577 B1

Fig. 4

Fig. 4A

Fig. 5

**EP 2 213 577 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6718728 B
- WO 02085712 A
- IT 1305810
- US 5058361 A
- EP 0884242 A
- DE 4202883 A
- EP 1342551 A